# EUROPEAN PATENT APPLICATION

(11) **EP 3 015 951 A1**
(43) Date of publication of application: **04.05.2016**
(21) Application number: 14200149.4
(22) Date of filing: 23.12.2014
(51) Int. Cl.: G06F 1/32

(54) **Dynamic adjustment of CPU operating frequency**

(30) Priority: 28.10.2014 US 201414526310
(71) Applicant: LinkedIn Corporation, Mountain View, California 94043 (US)
(72) Inventor: Zhuang, Zhenyun, Mountain View, CA 94043 (US); Ramachandra, Haricharan K., Mountain View, CA 94043 (US); Sridharan, Badrinath K., Mountain View, CA 94043 (US)
(74) Representative: D Young & Co LLP

(57) **Abstract**

A system, apparatus, and method are provided for dynamically adjusting or modifying the operating frequency of a CPU or other processor component, based on a current performance of an application (or applications) executed by the CPU and a target performance, such as a performance level identified in a service level agreement (SLA) associated with the application(s). Multiple thresholds or zones of performance are defined, which may be altered during operation (e.g., based on a profile or predicted CPU workload), and each threshold/zone is associated with a frequency adjustment to implement when the application's performance triggers the threshold or zone. Illustrative adjustments include maximizing the operating frequency, minimizing it, and scaling it up or down one or more discrete levels within a range of frequencies at which the CPU can operate. Thus, CPU operation is adjusted with a primary goal of satisfying application SLAs and a secondary goal of conserving energy.

## Description

### Field of the Invention

This disclosure relates to the field of computer systems. More particularly, a system and method are provided for dynamically varying the frequency at which a central processing unit (CPU) operates in such a computer system, which in turn can affect the power consumed during operation.

### Background of the Invention

The power consumption of a CPU depends upon the frequency and voltage with which it operates. The sole goal of existing methods of adjusting the power used by a CPU (e.g., ACPI or Advanced Configuration and Power Interface) is to reduce its consumption. These methods typically reduce a CPU's power when a workload is light, while allowing it to increase when the workload is heavy. Although energy consumption and the ensuing cost of that energy may be a concern for some individual users and/or organizations, it is not always the primary concern they possess regarding operation of their computing assets.

For example, an organization that provides an online service (e.g., a web site, an application) may be more concerned with providing adequate or promised performance than with reducing energy costs. These two desires - performance and energy conservation - often conflict. Because existing methods of adjusting a CPU's power consumption cannot and do not consider performance requirements of a particular application, the organization's desired performance goal(s) may be thwarted or obstructed when a CPU is throttled. In addition, an existing method may unnecessarily allow excessive energy consumption when it is increased to meet a relatively heavy workload, if the performance of a primary or key application was already at a target or above a target level before the power increase.

### Summary

The claimed invention is defined in the appended claims.

### Detailed Description of the Drawings

Various embodiments of the invention will now be described in detail by way of example only with reference to the following drawings:
Figure 1 is a block diagram depicting a system in which a CPU operating frequency is automatically adjusted, in accordance with some embodiments.
Figures 2A-B illustrate multiple performance thresholds and zones of performance, in accordance with some embodiments.
Figure 3 is a flow chart illustrating a method of automatically adjusting a CPU operating frequency, in accordance with some embodiments.
Figure 4 is a block diagram depicting an apparatus in which a CPU operating frequency is automatically adjusted, in accordance with some embodiments.
The skilled person will understand that the features shown in these drawings and described for the various embodiments can be readily combined with one another to create new embodiments as appropriate, even if such a combination is not explicitly recited herein.

### Detailed Description

The following description is presented to enable any person skilled in the art to make and use the disclosed embodiments, and is provided in the context of one or more particular applications and their requirements. Various modifications to the disclosed embodiments will be readily apparent to those skilled in the art, and the general principles defined herein may be applied to other embodiments and applications without departing from the scope of those that are disclosed. Thus, the present invention or inventions are not intended to be limited to the embodiments shown, but rather are to be accorded the widest scope consistent with the disclosure.

In some embodiments, a system, apparatus, and methods are provided for dynamically adjusting operation of a CPU (Central Processing Unit) or other processor component. A first and primary goal of these adjustments is to meet the requirements of a service-level agreement (SLA) of an application or service that is executed by the CPU. A secondary goal is to reduce the amount of electrical energy or power consumed by the CPU.

In these embodiments, operation of a CPU is adjusted by altering the frequency at which the unit operates (i.e., its clock rate), or the electrical voltage level supplied to it. Thus, the CPU's operating frequency may be increased when necessary to facilitate satisfaction of an SLA requirement, but may be decreased if the application is out-performing the SLA requirement.

Implementation of a system, apparatus, and/or method may differ from one embodiment to another. In some embodiments, functionality described herein is embedded in an operating system of a computing device, or a service, utility, or other program that executes on the device. For example, one of the latter embodiments may entail creation of a new governor or modification of an existing governor within the Advanced Configuration and Power Interface (ACPI) utility provided by the Linux^{®} operating system, or a similar utility. Or, the functionality may be embodied within a separate program that executes in parallel with other processing performed by a CPU, or even within an application that is monitored to promote satisfaction of its associated SLA.

In some embodiments, a CPU's operating frequency is dynamically adjusted in any of multiple ways. For example, a "maximize" or "minimize" adjustment will cause the operating frequency to be immediately changed to the maximum or the minimum, respectively. Further, a "scale up" or "scale down" adjustment will cause the operating frequency to be increased or decreased, respectively, by a default amount or by an amount specified at the time the adjustment is to be made.

The manner in which the operating frequency of a processor component is adjusted, and the extent to which it is adjusted, depend upon the current performance of an application (or service) executed by the processor, as compared to a service level agreement (SLA) of the application (or service), in terms of throughput, response time, latency, and/or some other metric(s). Illustratively, a processor's operating frequency may be immediately maximized if the current performance of the application falls below the target performance (e.g., a performance level identified in the SLA), may be increased somewhat if the current performance only meets or slightly exceeds the target performance, and may be decreased if the current performance substantially exceeds the target performance. In some circumstances no adjustment may be made.

In some embodiments, multiple thresholds of application performance are defined for purposes of determining which, if any, adjustment to make. For example, one threshold might match the application's target performance (e.g., 10K events per second (events/sec) throughput, 200KBps throughput, 100ms response time), another threshold may be set at 110% of the target performance, another at 125%, and so on. A threshold may be set at less than 100% of the target performance. The multiple thresholds may be seen as defining various zones of performance, and each zone (or each threshold) will have an associated adjustment to apply to the CPU when the application's current performance level matches that zone (or threshold). The application's current performance may be measured with any periodicity; in some embodiments this period may be on the order of ten to twenty seconds.

Adjustments may also depend upon the particular CPU that is being adjusted. For example, different CPUs have different minimum and/or maximum operating frequencies, and adjustments may therefore differ from one processor to another when they encounter the same or a similar workload. As an example, consider an illustrative processor or CPU core that has a minimum operating frequency of 1200 MHz, a maximum operating frequency of 2001 MHz, and eight additional operating frequency levels spaced 100 MHz apart (i.e., 1300 MHz, 1400 MHz, ..., 2000 MHz). Thus, scaling-up or scaling-down this processor's operating frequency may cause it to increase or decrease one or more levels (or to the maximum or minimum). Other CPUs may have more or fewer operating frequencies, different maximums and minimums, and/or other differences.

Yet further, an adjustment to a CPU's operating frequency may depend upon a profile of the CPU's workload, or at least a load presented by the application. For example, over time, the workload may be tracked at different times of day, for multiple days, multiple weeks, etc. A learned or historical profile may then be assembled that represents the workload, to show periods of relatively high load, relatively low load, transitions between high and low workloads, etc. A projected or forecasted profile may be derived from a historical profile to cover a future time period, and may be altered to account for some significant event(s), such as release of a new version of an application, release of a new application feature, a temporary lack of access to an application (e.g., for maintenance or update), etc.

Any type of profile may be applied during the selection of performance thresholds/zones, and/or may be used to alter an adjustment associated with a threshold or zone. For example, during a predicted or expected period of increasing load or demand, a different set of thresholds/zones may be in use, which have different associated adjustments than a set of thresholds/zone used during some other period of time.

Or, the same set of thresholds/zones may be used during the period of increasing load or demand, but a profile could be applied to form a set of corrections such that any decrease in a CPU's operating frequency that might ordinarily be implemented because an application is performing better than its target will be nullified (so that no adjustment is implemented) or might even be reversed (so that the operating frequency is increased instead of decreased). Similarly, if the application's current performance would ordinarily cause no adjustment to be applied to the CPU's operating frequency (i.e., no increase and no decrease), it might instead be scaled up.

Use of a profile to set or alter adjustments to a CPU's operating frequency may be particularly helpful when the periodicity with which a monitored application's performance is measured is relatively long, such as one minute or multiple minutes.

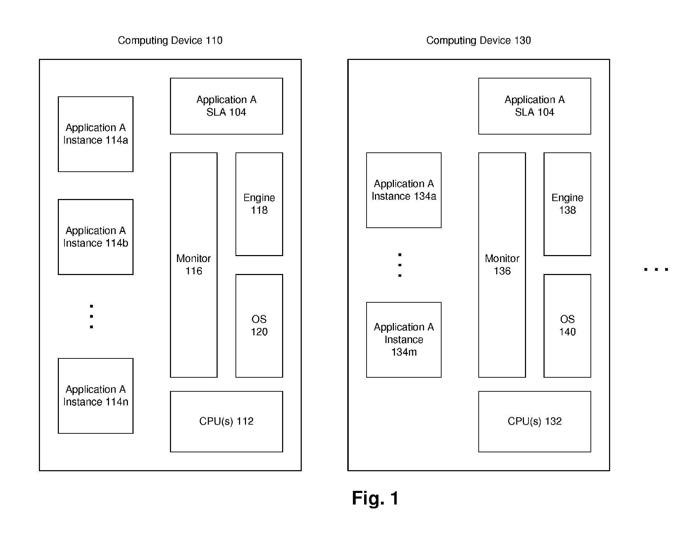

Figure 1 is a block diagram of a system for adapting CPU power levels, according to some embodiments.

In these embodiments, each of multiple computers or computing devices (e.g., device 110, device 130) includes one or more CPUs or processors (e.g., CPU(s) 112, CPU(s) 132). Each device's processor(s) execute one or more instances of a common application or service, such as application A (e.g., instance 114a, instance 114b, instance 134a), for which corresponding service level agreement 104 is installed on all devices that execute the application.

Installation of SLA 104 may involve storing a required or desired level of performance of application A, or some other level of performance identified in the SLA, in terms of one or more quantifiable metrics, such as a number of queries processed per second (e.g., qps), throughput, response time, latency, etc.

A typical SLA identifies at least one level of performance, but may allow for deviation from that target performance. For example, the SLA for application A may dictate that throughput should be higher than 200KBps for 99% of a twenty-four hour period, and/or that response time shall be less than 100ms for 97.5% of all queries. However, for purposes of some embodiments these requirements may be treated as absolutes, and SLA 104 as installed on devices 110, 130 will reflect the need to maintain throughput greater than 200KBps and response time of less than 100ms. Thus, when the current performance of an instance of application A is observed, it will be compared to one or more levels of performance identified in SLA 104.

Monitors 116, 136, which may comprise hardware and/or software modules, monitor the performances of the instances of application A executing on devices 110, 130, in terms of some or all metrics dictated by SLA 104 (and possibly others). In some implementations, monitors measure current performances of application instances on a periodic basis, such as every 10 seconds, every 2 minutes, etc.

The monitors report application performance to engines 118, 138. Application performance may be reported as current measures of the one or more metrics, by identifying a performance threshold that the current performance has (or has not) exceeded, as a zone of performance that encompasses the current performance, or in some other way.

Based on the current performance reported to them, engines 118, 138, which may comprise hardware and/or software modules, select and implement a suitable adjustment to the operating frequencies of CPUs 112, 114. As discussed above, an adjustment may entail increasing or decreasing the operating frequency, or leaving the operating frequency as is. An operating frequency may be adjusted directly by an engine, by invoking the device's operating system (operating system 120, 130) or an OS utility, or by invoking some other program that can alter a processor's operating frequency.

When multiple application instances are running on one computing device, the monitor (e.g., monitor 116) may calculate and report to the engine (e.g., engine 118) the average performance, the lowest performance, or some other consolidated performance measurement. For example, the performances of all application instances may be averaged, but in computing the average the lowest performance or performances may be weighted more heavily than other instances in order to help ensure that some increase in a CPU's operating frequency is applied if any of the instances are (or are close to) performing below their target levels.

If all CPUs or processor cores of a computing device do not share the full workload of a monitored application, separate engines and possibly separate monitors may be instantiated for each CPU or processor core, or for each application instance. In this situation, each CPU/processor core's operating frequency will be adjusted as necessary to help ensure the application instances executed by that processing component perform satisfactorily.

One of ordinary skill in the art will appreciate that some systems in which an embodiment described herein may be implemented may include only a single computing device that executes only a single application instance. Also, an application instance may be configured to report its performance directly to an engine (i.e., without a monitor).

In some other embodiments, instead of monitoring only a single application (i.e., one or more instances of a single application) and dynamically adjusting a CPU's operating frequency to promote satisfaction of that one application's SLA, multiple applications may be monitored. In these other embodiments, each application has a corresponding SLA and a target performance, and a separate monitor periodically determines or measures the performance of the active instances of its corresponding application, and reports it to an engine responsible for determining how to adjust a CPU's frequency.

As with multiple instances of a single application, an adjustment in these embodiments may be selected based on the lowest-performing application, the average application performance, or some other measure of the multiple applications' performances. In some implementations of these embodiments, a separate engine or sub-engine may operate for each application, and propose or request a particular adjustment to a central or final engine, possibly with an indication of its application's performance, and the central engine may select and apply a suitable operating frequency adjustment.

In embodiments in which a profile is implemented to modify or alter adjustments to a CPU's operating frequency, separate profile modules may operate for each application that is monitored, and will communicate with an engine as necessary. Also, instead of installing separate SLAs for each application (if multiple applications are monitored), the SLAs may be incorporated into the engine or stored in some other system component (e.g., a profile array).

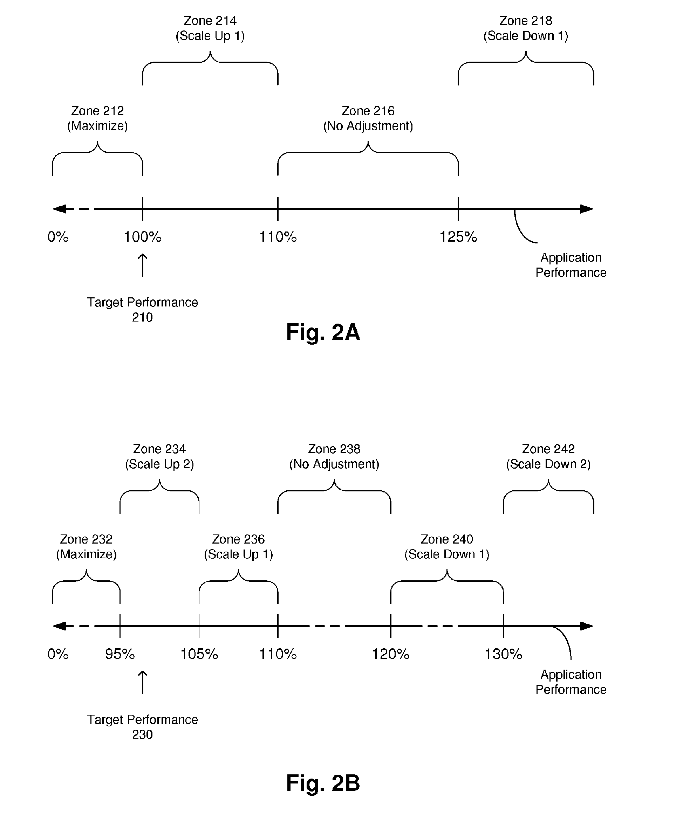

Figures 2A-B illustrate multiple performance thresholds and zones of performance, according to some embodiments. The illustrated thresholds and zones are dependent upon the specific CPU whose operating frequency is to be dynamically and automatically adjusted. In particular, and as mentioned above, different CPUs often have different minimum and maximum frequencies and/or different discrete operating frequencies between their maxima and minima.

In Figure 2A, three thresholds have been set, at 100%, 110%, and 120% of the target performance, which divide the spectrum of possible performance into four zones - zones 212, 214, 216, 218. Each zone has an associated operating adjust frequency to implement when the monitored application's current performance is within the zone.

Thus, when the application's performance is less than the target performance (e.g., a performance metric identified in the application's SLA), the CPU operating frequency will be maximized (if not already at the maximum). When the application's performance slightly exceeds the target (e.g., by less than 10%), the operating frequency will be increased by one discrete level (e.g., from 1500MHz to 1600MHz) if it is not already at the maximum. When the application's performance substantially exceeds the target (e.g., by more than 20%), the operating frequency will be decreased one level (if it is not already at the minimum). Otherwise, the operating frequency will not be changed.

In Figure 2B, five performance thresholds are set, at 95%, 105%, 110%, 120%, and 130% of the target performance, and divide the performance spectrum into six zones - zones 232, 234, 236, 238, 240, 242. When the application performance is more than just slightly below the target performance, the CPU's operating frequency will be maximized (if it is not already at the maximum). If performance is slightly below or above the target performance (e.g., between 95% and 105%), the operating frequency will be scaled up two levels (if not already at the maximum), or scaled up one level if only one level below the maximum; if the current performance is a little higher (e.g., between 105% and 110%), the CPU's frequency will be scaled up just one level (if not already at the maximum). If the current performance is substantially above the target (e.g., above 130%), the operating frequency will be reduced or scaled down two levels if possible (e.g., if not at the minimum); if performance is a little lower (e.g., between 120% and 130%), it will be scaled down one level if not already at the minimum. Otherwise, the CPU's operating frequency is left unchanged.

In other embodiments, thresholds may be set at any points along an application's performance spectrum, and zones of performance may encompass any sub-ranges of the spectrum.

In the embodiments of Figures 2A-B, the indicated adjustments are applied to a CPU's operating frequency without regard to the CPU's workload, or at least any workload other than the application(s) being monitored. Thus, if a monitored application's performance is below (or somewhat above) its target performance, the operating frequency may be increased (or maintained) even if a traditional power management scheme would reduce the CPU's energy consumption because the CPU is relatively lightly loaded.

Similarly, if a monitored application's performance is well above its target, the CPU's operating frequency may be reduced even if its workload is relatively high and would normally require the CPU's power to be maintained or even scaled up.

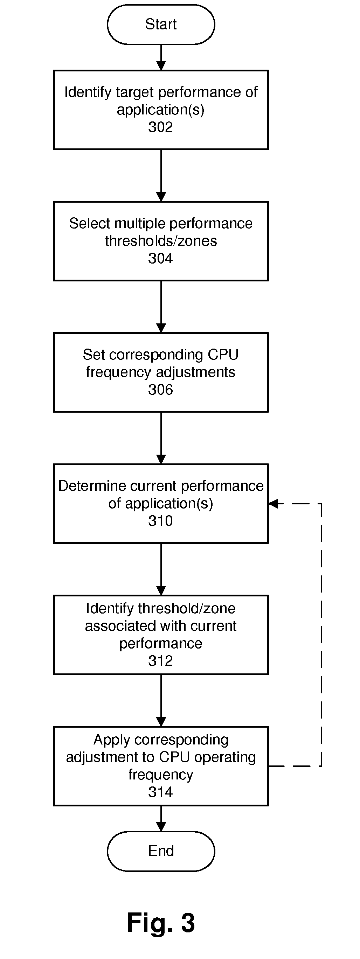

Figure 3 is a flow chart illustrating a method of automatically adjusting a CPU operating frequency, in accordance with some embodiments.

In operation 302, target performances are identified for the application or applications that are to be monitored. Monitoring an application in these embodiments means that its performance will be periodically determined or measured, and the operating frequency of a CPU that executes at least one instance of the application will be automatically and dynamically adjusted as necessary to promote performance of the application at or above the target level, while allowing for it to decrease in order to save power or energy as long as the target performance is achieved.

In operation 304, multiple performance thresholds are set, which inherently define contiguous zones of performance, or the zones may be defined directly. As shown above, thresholds may be established in terms of percentages of the target performance. Also, or instead, a threshold may be set (or a zone defined) based on absolute performance measurements of some metric - such as throughput (e.g., a number of queries per second (qps) that are processed, a bandwidth), a response time, a throughput, etc.

In operation 306, for each zone of performance (or performance threshold), a corresponding or associated adjustment is established. Adjustments may be established to increase, decrease, or leave unchanged the CPU's operating frequency. Illustrative adjustments are depicted in Figures 2A-B and described above.

In operation 310, the current performance(s) of the application(s) are measured or obtained. An application that can monitor its own performance may provide this measurement, or a separate monitor module or component may operate to monitor the application's performance and provide the measurement. The current performance may be obtained on a periodic basis, such as every 5 seconds, every 10 second, every 20 seconds, every minute, every 2 minutes, etc.

In operation 312, an adjustment engine determines which zone(s) of performance encompasses the application's (or applications') current performance. Alternatively, the engine may identify the highest performance threshold the application's current performance exceeds, the threshold nearest to the current performance measurement, or identify a zone of performance or performance threshold in some other manner.

In operation 314, the adjustment engine adjusts the CPU's operating frequency (by itself or by invoking some other utility or command), according to the adjustment associated with the zone or threshold identified in operation 312, if an adjustment is dictated. As shown above, for some performance measurements, the operating frequency may be maintained as is (no increase or decrease). After operation 314, the illustrated method may end or may return to operation 310 to repeat the process of determining current application performance, identifying the corresponding adjustment to apply, and applying that adjustment, if any.

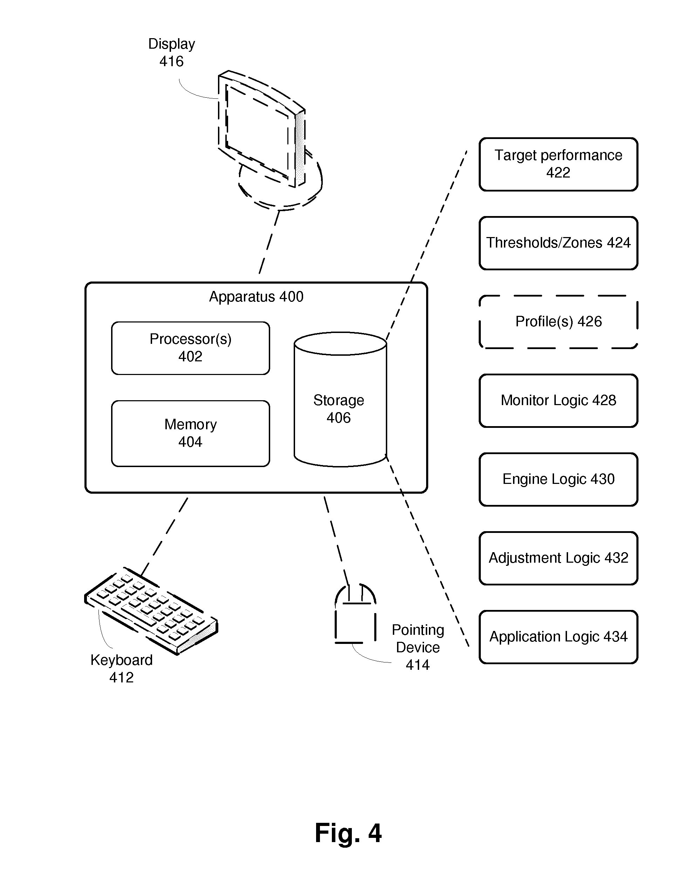

Figure 4 is a block diagram depicting an apparatus in which a CPU operating frequency is automatically adjusted, in accordance with some embodiments.

Apparatus 400 of Figure 4 includes processor(s) or CPU(s) 402, memory 404, and storage 406, which may comprise one or more optical, solid-state, and/or magnetic storage components. Storage 406 may be local or remote to the apparatus. Apparatus 400 can be coupled (permanently or temporarily) to keyboard 412, pointing device 414, and display 416.

In addition to information such as target performance 422, thresholds/zones 424, and optional profile(s) 426, storage 406 stores logic that may be loaded into memory 404 for execution by processor(s) 402. Such logic includes monitor logic 428, engine logic 430, adjustment logic 432, and application logic 434. Multiple application logic modules representing multiple separate application programs may replace application logic 434 in some computing environments. In other embodiments, any or all of the logic modules may be combined or divided to aggregate or divide their functionality as desired or warranted.

Target performance 422 comprises one or more metric values that represent target performance levels of application logic 434, multiple instances of which may be executed on the apparatus. In some embodiments, a target performance may be extracted from a service level agreement of application logic 432.

Thresholds/zones 424 comprise multiple metric values or ranges of metric values, within a spectrum or interval of possible performance measurements of application logic 432. Instead of absolute metric values (e.g., 200KBps throughput, lOKqps), thresholds/zones 424 may be defined as percentages of target performance 422.

Optional profile(s) 426 are historical, simulated, and/or predicted profiles of a workload of processor(s) 402. For example, a profile of application logic 434 may indicate an approximate number queries that is expected to be received within different time periods (e.g., different hours of a day), based on past workloads (e.g., the last week, the last month) and/or expected workloads. Adjustments made to a processor's operating frequency may depend on or be altered by a profile.

In some implementations, the dynamic operating frequency adjustments associated with thresholds/zones 424 are determined in part with reference to profile(s) 426. In some other implementations, an adjustment associated with a threshold or zone 424 that would ordinarily be implemented may be altered according to a profile 426. Thus, an adjustment that calls for a particular increase (or decrease) in a processor's operating frequency may be magnified or reduced based on an expected workload of the processor, or may be nullified (i.e., to apply no adjustment).

Monitor logic 428 comprises processor-executable instructions for monitoring, measuring, or otherwise determining a current performance of (an instance of) application logic 434, in terms of one or more metrics. Monitor logic 428 may be embedded within application logic 434 or engine logic 430 in some embodiments. In some other embodiments, multiple monitor logic modules may function to monitor different applications (application logic modules) or different application instances.

Engine logic 430 comprises processor-executable instructions for determining which, if any, dynamic adjustment to apply to a processor's operating frequency in order to promote satisfaction of an application's SLA (e.g., by facilitating achievement of the application's target performance). Thus, different adjustments may be associated with each threshold/zone 424, which may be automatically applied (with or without modification according to profile(s) 426) when the application's current performance falls within an interval or range associated with the threshold/zone.

Adjustment logic 432 comprises processor-executable instructions for applying the adjustment requested by engine logic 430. Adjustment logic may operate as an independent module executed by processor(s) 402, or may be embedded within another logic module depicted in Figure 4, or some other logic (e.g., an operating system of the apparatus), or may even be embedded in hardware or firmware. Engine logic 430 and/or adjustment logic 432 may be built-into application logic 434.

An environment in which one or more embodiments described above are executed may incorporate a general-purpose computer or a special-purpose device such as a hand-held computer or communication device. Some details of such devices (e.g., processor, memory, data storage, display) may be omitted for the sake of clarity. A component such as a processor or memory to which one or more tasks or functions are attributed may be a general component temporarily configured to perform the specified task or function, or may be a specific component manufactured to perform the task or function. The term "processor" as used herein refers to one or more electronic circuits, devices, chips, processing cores and/or other components configured to process data and/or computer program code.

Data structures and program code described in this detailed description are typically stored on a non-transitory computer-readable storage medium, which may be any device or medium that can store code and/or data for use by a computer system. Non-transitory computer-readable storage media include, but are not limited to, volatile memory; non-volatile memory; electrical, magnetic, and optical storage devices such as disk drives, magnetic tape, CDs (compact discs) and DVDs (digital versatile discs or digital video discs), solid-state drives, and/or other non-transitory computer-readable media now known or later developed.

Methods and processes described in the detailed description can be embodied as code and/or data, which may be stored in a non-transitory computer-readable storage medium as described above. When a processor or computer system reads and executes the code and manipulates the data stored on the medium, the processor or computer system performs the methods and processes embodied as code and data structures and stored within the medium.

Furthermore, the methods and processes may be programmed into hardware modules such as, but not limited to, application-specific integrated circuit (ASIC) chips, field-programmable gate arrays (FPGAs), and other programmable-logic devices now known or hereafter developed. When such a hardware module is activated, it performs the methods and processed included within the module.

The foregoing embodiments have been presented for purposes of illustration and description only. They are not intended to be exhaustive or to limit this disclosure to the forms disclosed. Accordingly, many modifications and variations will be apparent to practitioners skilled in the art. The scope is defined by the appended claims, not the preceding disclosure.

## Claims

1. A method of dynamically adjusting operation of a central processing unit (CPU), the method comprising:
determining a current performance of an application executed by the CPU, in terms of one or more metrics; and
based on the current performance and a target performance identified in a service level agreement (SLA) associated with the application, dynamically modifying an operating frequency of the CPU, without regard for the workload of the CPU other than for the application.

2. The method of claim 1, further comprising, prior to said dynamically modifying:
selecting multiple thresholds of the one or more metrics, each threshold marking a boundary between two zones of performance of the application; and
for each of multiple zones of performance, associating with the zone an adjustment to apply to the operating frequency when the current performance is within the zone.

3. The method of claim 2, wherein:
said determining comprises, during execution of the application by the CPU, periodically identifying the current performance of the application in terms of the one or more metrics; and
said dynamically modifying comprises:
identifying a zone of performance encompassing the current performance; and
applying to the operating frequency the adjustment associated with the identified zone of performance.

4. The method of claim 2 or 3, wherein said associating comprises:
associating a decrease in the operating frequency with at least one zone of performance;
associating a maximum increase in the operating frequency with only one zone of performance; and
associating increases in the operating frequency less than maximum increase with one or more zones of performance.

5. The method of claim 4, wherein said associating further comprises:
for at least one zone of performance, associating zero adjustment in the operating frequency.

6. The method of any of claims 2 to 5, further comprising:
prior to determining the current performance, profiling demand for the application over multiple time periods;
wherein dynamically modifying the operating frequency comprises:
identifying a zone of performance encompassing the current performance; and
modifying the adjustment to the operating frequency based on the demand profile for the application.

7. The method of any preceding claim, wherein dynamically modifying the operating frequency comprises one of:
maximizing the operating frequency if the current performance is less than the target performance;
decreasing the operating frequency if the current performance exceeds the target performance by more than a first threshold; and
increasing the operating frequency if the current performance exceeds the target performance by less than a second threshold, wherein the second threshold is lower than the first threshold.

8. The method of claim 7, further comprising:
refraining from modifying the operating frequency if the current performance exceeds the target performance by more than the second threshold but less than the first threshold.

9. A computer program comprising instructions in machine-readable form that when executed by a computer system cause the computer system to perform a method of dynamically adjusting operation of a central processing unit (CPU) as recited in any preceding claim.

10. An apparatus, comprising:
a central processing unit (CPU); and
memory storing instructions that, when executed by the CPU, cause the apparatus to:
determine a current performance of an application executed by the CPU, in terms of one or more metrics; and
based on the current performance and a target performance identified in a service level agreement (SLA) associated with the application, dynamically modify an operating frequency of the CPU, without regard for the workload of the CPU other than for the application.

11. The apparatus of claim 10, the memory further comprising instructions that, when executed by the CPU, cause the apparatus to, prior to said dynamically modifying:
select multiple thresholds of the one or more metrics, each threshold marking a boundary between two zones of performance of the application; and
for each of multiple zones of performance, associate with the zone an adjustment to apply to the operating frequency when the current performance is within the zone.

12. The apparatus of claim 11, wherein:
said determining comprises, during execution of the application by the CPU, periodically identifying the current performance of the application in terms of the one or more metrics; and
said dynamically modifying comprises:
identifying a zone of performance encompassing the current performance; and
applying to the operating frequency the adjustment associated with the identified zone of performance.

13. The apparatus of any of claims 10 to 12, wherein said apparatus is configured to perform the method of any of claims 1 to 8.

14. The apparatus of any of claims 10 to 13, comprising:
a monitor module comprising a computer readable medium storing instructions that, when executed, cause the system to determine a current performance of an application executed by a CPU, in terms of one or more metrics; and
an engine module comprising a computer readable medium storing instructions that, when executed, cause the system to, based on the current performance and a target performance identified in a service level agreement (SLA) associated with the application, dynamically modify an operating frequency of the CPU, without regard for a workload of the CPU other than the application.

15. A system, comprising:
a monitor module comprising a computer readable medium storing instructions that, when executed, cause the system to determine a current performance of an application executed by a CPU, in terms of one or more metrics; and
an engine module comprising a computer readable medium storing instructions that, when executed, cause the system to, based on the current performance and a target performance identified in a service level agreement (SLA) associated with the application, dynamically modify an operating frequency of the CPU, without regard for the workload of the CPU other than for the application.
